# EUROPEAN PATENT APPLICATION

(11) **EP 1 128 210 A1**
(43) Date of publication of application: **29.08.2001**
(21) Application number: 01301410.5
(22) Date of filing: 19.02.2001
(51) Int. Cl.: G03D 15/00, G03B 17/53

(54) **Image information acquisition transmitting apparatus and image information inputting and recording apparatus**

(30) Priority: 22.02.2000 JP 2000043761
(71) Applicant: KONICA CORPORATION, Tokyo (JP)
(72) Inventor: Tanka, Shinri, Hino-shi, Tokyo, 191-8511 (JP); Komamura, Tawara, Hino-shi, Tokyo, 191-8511 (JP); Sawada, Katsutoshi, Hino-shi, Tokyo, 191-8511 (JP)
(74) Representative: Nicholls, Michael John

(57) **Abstract**

A face image information acquiring transmitting apparatus, comprises: a face image information acquiring section to acquire face image information of a customer; a transmitting section to transmit the face image information acquired by the face image information acquiring section to a transmission destination; and a payment receiving section to receive a payment charged to the customer.

## Description

### BACKGROUND OF THE INVENTION

The present invention relates to an image information acquisition transmitting apparatus and image information inputting and recording apparatus.

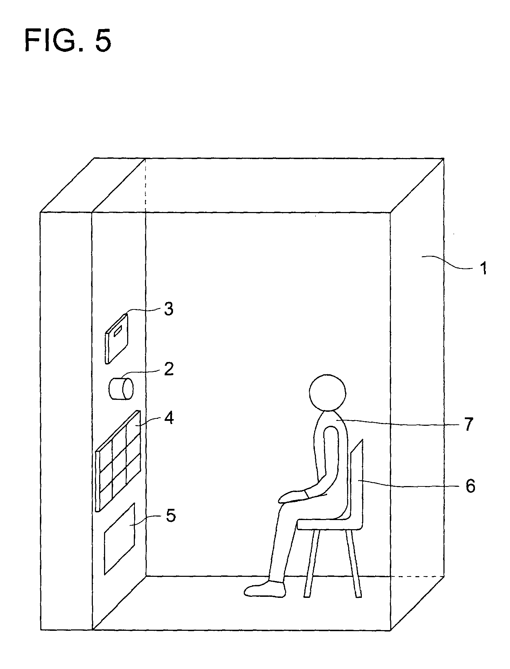

A present certificate photographing system obtains the payment by providing a print photography to the user. Fig. 5 is a conceptual view of the conventional certificate photographing system. In the drawing, numeral 1 is an automatic photography forming apparatus. In the automatic photography forming apparatus 1, a camera 2, charge insertion opening 3, operation section 4, and print delivery opening 5 are provided. The photographing is conducted in such a manner that a subject (a person) 7 sits on a chair 6 provided inside the system.

Initially, necessary numbers of print sheets, and a desired print size are inputted from the operation section 4. After that, when a charge is paid from the charge insertion opening 3, the camera 2 takes a picture of the subject 7. In the inside of the automatic photography forming apparatus, the photographed photographic image is processed, and a print on which a portrait is photographed is delivered from the delivery opening 5.

In such the conventional certificate photographing system, an object of the user is to attach the print to the necessary document, and the final object is not to obtain the print itself. Accordingly, when the various proceedings become possible through the communication, there is a possibility that the need of the certificate photography as a print is reduced. Also in such the case, the portrait photograph information is the important information for confirmation of the person himself, and it is expected that the need for a function in which the portrait photograph is photographed and the portrait photograph information is formed, and it can be transmitted to the desired person through the communication, is increased.

In the conventional certificate photographing system, the object is to photograph the portrait photograph at that position, and the system is a single function, and an additive value is not added to the photographed image information.

### SUMMARY OF THE INVENTION

In view of such the problems, the present invention is attained, and the object of the present invention is to provide an image information acquisition transmitting apparatus and image information inputting and recording apparatus which has a communication function in the photograph certificate system, and can record and/or transmit the photograph image information photographed at a predetermined position.

The above object can be attained by the following structures.
(1-1) A face image information acquiring transmitting apparatus, comprises
   a face image information acquiring section to acquire face image information of a customer;
   a transmitting section to transmit the face image information acquired by the face image information acquiring section to a transmission destination; and
   a payment receiving section to receive a payment charged to the customer.
(1-2) In the face image information acquiring transmitting apparatus of (1-1), the transmitting section transmits the face image information acquired by the face image information acquiring section to the transmission destination in response to the receipt of the payment by the payment receiving section.
(1-3) In the face image information acquiring transmitting apparatus of (1-1), the payment receiving section is allowed to receive the payment in response to the transmission of the face image information acquired by the face image information acquiring section to the transmission destination by the transmitting section.
(1-4) In the face image information acquiring transmitting apparatus of (1-1), the face image information acquiring transmitting apparatus further comprises:
   an ID (identification) information providing section to provide ID information to identify the face image of the customer, wherein the transmitting section transmits the face image information acquired by the face image information acquiring section to the transmission destination together with the ID information provided by the ID information providing section.
(1-5) In the face image information acquiring transmitting apparatus of (1-1), the face image information acquiring section is a face image photographing device to photograph the face image of the customer.
(1-6) In the face image information acquiring transmitting apparatus of (1-1), the face image information acquiring section is a face image information reader to read the face image information from a recording medium to record the face image information of the customer.
(1-7) In the face image information acquiring transmitting apparatus of (1-1), the face image information acquiring transmitting apparatus further comprises:
   a payment charging section to charge a payment for the acquisition of the face image information of the customer by the face image information acquiring section and/or for the transmission of the face image information by the transmitting section.
(1-8) In the face image information acquiring transmitting apparatus of (1-1), the face image information acquiring transmitting apparatus further comprises:
   a transmission destination selecting section to select the transmission destination to be transmitted with the face image information by the transmitting section from a plurality of transmission destinations.
(1-9) In the face image information acquiring transmitting apparatus of (1-8), the face image information acquiring section is a face image photographing device to photograph the face image of the customer based on a photographing condition, and wherein the face image photographing device changes the photographing condition in accordance with the transmission destination selected by the transmission destination selecting section.
(1-10) In the face image information acquiring transmitting apparatus of (1-8), the face image information acquiring transmitting apparatus further comprises:
   an image processing section to conduct an image processing to the face image information acquired by the face image information acquiring section based an image processing condition, wherein the image processing section changes the image processing condition in accordance with the transmission destination selected by the transmission destination selecting section.
(1-11) In the face image information acquiring transmitting apparatus of (1-8), the face image information acquiring transmitting apparatus further comprises:
   a payment charging section to charge a payment for the acquisition of the face image information of the customer by the face image information acquiring section and/or for the transmission of the face image information by the transmitting section, wherein the payment charging section charges the payment in accordance with the transmission destination selected by the transmission destination selecting section.
(1-12) In the face image information acquiring transmitting apparatus of (1-1), the face image information acquiring transmitting apparatus further comprises:
   a transmission permission selecting section to select permitting or not permitting the transmitting section to transmit the face image information acquired by the face image information acquiring section.
(1-13) In the face image information acquiring transmitting apparatus of (1-1), the face image information acquiring transmitting apparatus further comprises:
   a printer to print a face image based on the face image information acquired by the face image information acquiring section.
(1-14) In the face image information acquiring transmitting apparatus of (1-1), the face image information acquiring transmitting apparatus further comprises:
   a warning section to issue a warning in the case that the payment receiving section does not receive the payment within a predetermined time after the face image information is acquired or after the face image information is transmitted, and
   an eliminating section to eliminate the face image information in the case that the payment receiving section does not receive the payment within a predetermined time after the warning section issues the warning.
(1-15) In the face image information acquiring transmitting apparatus of (1-1), the face image information acquiring transmitting apparatus further comprises:
   a face image information recording section to record the face image information acquired by the face image information acquiring section into an image information recording medium.
(1-16) In the face image information acquiring transmitting apparatus of (1-1), the transmitting section transmits the face image information in accordance with a comparison result between a reference personal information representing the face image information of a customer and the face image information acquired by the face image information acquiring section.
(1-17) In the face image information acquiring transmitting apparatus of (1-1), the face image information acquiring transmitting apparatus further comprises:
   an inputting section to input a personal information, wherein the transmitting section transmits the face image information in accordance with a comparison result between the inputted personal information and a reference personal information to identify the customer.

Further, the above object may be attained by the following preferable structures.
(2-1) The apparatus has an image information acquisition means for acquiring the image information of a subject, and a transmission means for transmitting the image information of the subject acquired by the image information acquisition means to transmission destinations, and a means for receiving the payment of the compensation charged on the subject.
   In the case where the apparatus is structured as described above, when the subject pays the payment, the high quality image information can be transmitted to the transmission destination, and even by the user who has no personal computer, digital camera, or communication means, the image information (specifically, the portrait photograph information) can be transmitted by the transmission means.
(2-2) An payment charging means for charging the payment for the acquisition of the image information of the subject by the image information acquisition means and/or the transmission of the image information of the subject by the transmission means, is provided.
   When the apparatus is structured as described above, the payment is set by the payment charging means and when the set account is paid, the photographed image information can be transmitted.
   Herein, the payment charging means to charge the payment, and the payment means to pay the charged payment.
(2-3) The apparatus has the image information acquisition means for acquiring the image information of the subject, and the image information of the subject is compared with the reference personal information of the subject previously stored in a storage means, and corresponding to the comparison result, the transmission by the transmission means is permitted.
   When the apparatus is structured as described above, the portrait photograph photographed at the position is compared and collated with the reference personal information, and corresponding to the comparison result, the image information can be transmitted.
(2-4) The storage means is a personal information control server to store and control the personal information.
   When the apparatus is structured as described above, by using the personal information control server as the storage means, the discrimination of the personal information can be surely and effectively obtained.
(2-5) The reference personal information of the subject previously stored in the storage means is the information inputted from an ID card in which the portrait photograph of the person is recorded.
   When the apparatus is structured as described above, the portrait photograph stored in the ID card and the portrait photograph photographed at the position are compared and collated with each other, and corresponding to the comparison result, the image information can be transmitted.
(2-6) The reference personal information of the subject previously stored in the storage means is the information inputted from the license.
   When the apparatus is structured as described above, the portrait photograph of the license is compared with the portrait photograph photographed at the position, and corresponding to the comparison result, the transmission by the transmission means can be conducted.
(2-7) The apparatus has the information input means for the subject to input the information, and the input information inputted from the information input means and the reference personal information previously stored in the storage means are compared with each other, and corresponding to the comparison result, the transmission by the transmission means is permitted.
   When the apparatus is structured as described above, the information inputted at the position and the reference personal information are compared and collated with each other, and corresponding to the comparison result, the image information can be transmitted.
(2-8) The storage means is a reference personal control server to store and control the reference personal information.
   When the apparatus is structured as described above, by using the personal information control server as the storage means, the discrimination of the personal information can be surely and effectively obtained.
(2-9) The character information inputted from the information input means is obtained, and the character information inputted from the information input means and the reference personal information previously stored in the storage means are compared with each other, and corresponding to the comparison result, the transmission by the transmission means is permitted.
   When the apparatus is structured as described above, the character information inputted at the position and the reference personal information are compared and collated with each other, and corresponding to the comparison result, the image information can be transmitted.
(2-10) The photographing condition of the subject is changed corresponding to the transmission destination.
   When the apparatus is structured as described above, the image information in which the size of the photograph, or the like, is properly adjusted, can be transmitted.
(2-11) The apparatus has a means for the subject to input the judgement whether the image information of the subject acquired by the image information acquisition means is to be transmitted by the transmitting means.
   When the apparatus is structured as described above, the favorite image of the subject can be transmitted from the transmission means.
(2-12) The apparatus prints out the image according to the image information transmitted by the transmission means.
   When the apparatus is structured as described above, because the image information transmitted to the transmission destination can be printed out, the transmitted image can be confirmed.
(2-13) The transmission destination is selected from a plurality of predetermined transmission destinations, and the payment is set for each transmission destination.
   When the apparatus is structured as described above, because the transmission destination is predetermined, the transmission destination can be easily selected, and the payment corresponding to the transmission destination can be paid.
(2-14) The apparatus has an image information input means for inputting the information from an information storage medium in which the portrait photograph of the user is stored, the transmission means for transmitting the image information inputted from the image information input means, and a means for receiving the payment of the compensation charged on the subject.
   In the case where the apparatus is structured as described above, when the subject pays the payment, the high quality image information read from the information storage medium can be transmitted to the transmission destination, and even by the user who has no personal computer, digital camera or communication means, the portrait photograph information can be transmitted by the transmission means.
(2-15) An payment charging means for charging the payment for the transmission of the image information of the subject by the image information input means is provided.
   In the case where the apparatus is structured as described above, the payment is set by the payment charging means, and when the set account is paid, the photographed image information can be transmitted.
(2-16) The apparatus has a personal information input means for inputting a specific photographing of the subject and input information, and a storage means for storing the specific photographing and input information, and the photographing and input information inputted from the personal information input means and the reference information stored in the storage means are compared with each other, and corresponding to the comparison result, the transmission by the transmission means is permitted.
   When the apparatus is structured as described above, the reference information read from the separately provided storage means and the photographing and input information inputted from the personal information input means are compared with each other, and when these coincide with the other, it is judged that the subject is the person, and the image information can be transmitted.
(2-17) The storage means is a reference personal information control server to store and control the reference personal information.
   When the apparatus is structured as described above, by using the personal information control server as the storage means, the discrimination of the personal information can be obtained at high speed.
(2-18) The personal information input means is a means for inputting the image information of the license.
   When the apparatus is structured as described above, by inputting the image information of the license which is a stronger confirmation means for the person itself, the personal information can be more surely compared.
(2-19) The personal information input means is a means for inputting the ID card information in which the portrait photograph of the individual is recorded.
   When the apparatus is structured as described above, the portrait photograph stored in the ID card is compared and collated wit the portrait photograph photographed at the position, and corresponding to the comparison result, the image information can be transmitted.
(2-20) The transmission by the transmission means is permitted under the condition that the payment charged by the payment charging means is paid by the subject.
   When the apparatus is structured as described above, because the image information is transmitted under the condition that the payment is paid, the operation of the apparatus by the mischief can be excluded.
(2-21) The apparatus has a means for giving the alarm when the payment is not paid within a predetermined time, and for erasing the information, when a predetermined time period has passed after the alarm is given.
   When the apparatus is structured as described above, the operation of the apparatus by the mischief can be excluded.
(2-22) The apparatus has a means for the subject to input the judgement whether the image information of the subject obtained by the image information input means is to be transmitted by the transmission means.
   When the apparatus is structured as described above, the favorite image of the subject can be transmitted from the transmission means.
(2-23) The image is printed out according to the image information transmitted by the transmission means.
   When the apparatus is structured as described above, because the image information transmitted to the transmission destination can be printed out, the transmitted image can be confirmed.
(2-24) The transmission destination is one selected from a plurality of predetermined transmission destinations, and the payment is set for each of the transmission destinations.
   When the apparatus is structured as described above, because the transmission destination is previously set, the transmission destination can be easily selected, and the payment corresponding to the transmission destination can be paid.
(2-25) The apparatus has: an image information acquisition means for acquiring the image information of the subject; an image information recording means for recording the image information of the subject acquired by the image information acquisition means in a removable image information storage medium; and a payment charging means for charging the payment for the acquisition of the image information of the subject and/or the recording into the image information storage medium to the subject.
   When the apparatus is structured as described above, the image information acquired by the image information acquisition means can be recorded into the removable image information storage medium.
(2-26) Under the condition that the payment charged by the payment charging means is paid by the subject, the recording of the image information by the image information recording means into the removable image information storage medium is permitted.
   When the apparatus is structured as described above, under the condition that the payment is paid, the image information acquired by the image information acquisition means can be recorded into the removable image storage medium.
(2-27) The apparatus has a means for the subject to input the judgement whether the image information of the subject acquired by the image information acquisition means is to be recorded into the removable image information storage medium by the image information recording means.
   When the apparatus is structured as described above, the favorite image information of the subject can be recorded into the removable image information storage medium.
(2-28) The image information is printed out according to the image information recorded in the removable image information storage medium by the image information recording means.
   When the apparatus is structured as described above, because the image information recorded in the removable image information storage medium can be printed out, the recorded image can be confirmed.
(2-29) The apparatus has: an image information input means for inputting the image information; a transmission destination display means for displaying the transmission destination of the image information which is previously registered and inputted; and a transmission means for transmitting the image information of the subject acquired by the image information acquisition means together with the discrimination information of the subject set peculiar to the transmission destination, to the transmission destination selected by the input person of the image data from the displayed transmission destinations displayed by the transmission destination display means.
   When the apparatus is structured as described above, because the image information is stored together with the discrimination information of the subject, the subject can be easily confirmed at the transmission destination.
(2-30) The apparatus has the a personal information input means for inputting the specific photographing of the subject and the input information, and on condition of the judgement result that the specific reference information previously stored in the reference personal information control server for storing and controlling the reference information of the subject including the specific personal discrimination information coincides with the specific photographing and input information inputted from the personal information input means, the transmission to the transmission destination by the transmission means is permitted.
   In the case where the apparatus is structured as described above, the reference information previously stored in the personal information control server is compared with the photographing and input information inputted by the personal information input means, and when these coincide with each other, the transmission to the transmission destination can be conducted.
(2-31) The apparatus has a means for the subject to input the judgement whether the image information of the subject acquired by the image information acquisition means is to be transmitted by the transmission means.
   When the apparatus is structured as described above, the favorite image information of the subject can be transmitted.
(2-32) The image can be printed out according to the image information transmitted by the transmission means.
   When the apparatus is structured as described above, because the transmitted image information is printed out, the transmitted image can be confirmed.
(2-33) The transmission by the transmission means is permitted under the condition that the payment charged by the payment charging means is paid by the subject.
   When the apparatus is structured as described above, because the image information is transmitted under the condition that the payment is paid by the subject, the operation of the apparatus by the mischief or the like can be excluded.
(2-34) The apparatus has a means for giving an alarm when the payment is not paid within a predetermined period of time, and for erasing the information, when a predetermined period of time has passed after the alarm.
   When the apparatus is structured as described above, the operation of the apparatus by the mischief or the like can be excluded.

### BRIEF DESCRIPTION OF THE DRAWINGS

Fig. 1 is a block diagram showing the first embodiment of the present invention.

Fig. 2 is a conceptual view of a system using the present invention.

Fig. 3 is a block diagram showing the second embodiment of the present invention.

Fig. 4 is a block diagram showing the third embodiment of the present invention.

Fig. 5 is a conceptual view of the conventional certificate photographing system.

### DETAILED DESCRIPTION OF THE PREFERRED EMBODIMENT

A face image information acquiring transmitting apparatus of the present invention has a face image information acquiring means for acquiring the face image information of a customer, a transmitting means for transmitting the face image information acquired by the face image information acquiring means to a transmission destination, and a payment receiving means for receiving the payment of the compensation charged on the customer.

As the face image information acquiring means, a face image photographing means for photographing the face image (hereinafter, sometimes called image information acquiring means), or a face image information reading means for reading the information of the face image (hereinafter, sometimes called image information input means), is listed. As a specific example of the face image photographing means, a digital still camera, video camera, digital video camera, etc., are listed. As a specific example of the face image information reading means, a reading apparatus for each kind of recording media which can record the face image information as the digital information (FD, MD, MO, CD, CD-ROM, CD-R, CD-RW, DVD, DVD-ROM, DVD-RAM, MT, DAT, Zip, smart media, memory stick, compact flash, etc.) is listed.

When the face image information acquiring means is the face image photographing means, it is preferable that a portion corresponding to a background of a position at which the subject positions at the time of photographing is a uniform color. That is, it may be preferable that the photographing can be conducted without a background. Further, it is preferable that a strobe apparatus and an illumination apparatus are also provided. Further, it is preferable that the resolution of the face image photographing means is not below 3 hundred thousand pixels, more preferably not below a million pixels.

Further, as an specific example of the transmitting means (hereinafter, sometimes called information transmission and receiving means, together with the receiving means), an analog modem, interface, network card, TA, ATM, PIAFS, ASDL, centronics, RS232C, universal serial bus (USB), 10 base T, 100 base T, IEEE 1394, PCMCIA, etc., are listed. Further, as a form of a signal transmitted through the transmitting means, there are the serial transmission, parallel transmission, Ethernet, TCP/IP, Netware, etc. The transmitting means transmits the face image information in such a manner that it is connected to a network such as the local area network (LAN), wide area network (WAN), or internet, or through a telephone circuit, wire or wireless.

Further, when the transmitting means fails to transmit the face image information to the transmission destination, it may also be allowable that the transmission is repeated several times until it is successful. Further, it repeats the transmission by a predetermined times, however, when it does not succeed, it may also be stopped. In the case of these modes, it is preferable that the payment receiving means can receive the payment of the compensation corresponding to the transmission of the face image information acquired by the image information acquiring means to the transmission destination.

As a specific example of the payment receiving means (hereinafter, sometimes called a means for receiving the compensation, or the payment means), a means for receiving the payment of the cash (a scanner, sensor for detecting the weight, sensor for detecting the dimension, sensor for detecting the undulation, etc.), reader of the credit card, reader of the pre-paid card, reader of the debit card, payment apparatus by the payment service of the portable phone (having a control apparatus, a transmission apparatus to transmit a signal in which the payment is completed, or the information relating to the payment (personal identification number, etc.) to the portable phone, a receiving apparatus to receive the information relating to the payment from the portable phone, etc.), a receiving apparatus to receive the payment by the payment service of the internet (having an input apparatus such as a key board to input the information (personal identification number) relating to the payment, a control apparatus, a transmission apparatus to transmit the information relating to the payment (personal identification number), a receiving apparatus to receive the signal in which the payment is completed, etc.), are listed.

In this connection, the face image information may be made to be acquired by the face image acquiring means corresponding to the reception of the payment of the compensation by the payment receiving means, or the transmitting means may be made to transmit the face image information acquired by the face image acquiring means to the transmission destination corresponding to the reception of the payment of the compensation by the payment receiving means, (in this case, regardless of the payment of the compensation, the face image information may be made to be acquired by the face image acquiring means), or the payment receiving means may be made to enable to receive the payment of the compensation corresponding to the transmission of the face image acquired by the face image acquiring means to the transmission destination by the transmitting means.

Further, it is preferable that the apparatus has an identification information providing means to provide the identification information to identify the face image of the customer. In this case, it is preferable that the transmitting means transmits the face image information acquired by the face image acquiring means together with the identification information provided by the identification information providing means to the transmission destination.

As a specific example of the identification information providing means, an apparatus to provide the identification information which is the character information to be expressed by characters and numerals such as an ID number or password for each face image, or for each acquisition of the face image, or an apparatus to provide the identification information which is the image information such as bar code or a complicated image (preferably, an image other than the face image of the customer), is listed. Further, it may be allowable that, not only for each face image, but the identification number is also provided for each customer. When the identification information is the ID number, it is rather preferable that the consecutive numbers or characters are not provided in the order of the acquisition (for example, in the order of the photographing), but the random numbers or characters are provided as the ID number.

Further, it is preferable that the payment receiving means has a account means for accounting the compensation for the acquisition of the face image information of the customer/or for the transmission of the face image information by the transmitting means. As a specific example of the account means, a MPU (Micro Processing Unit), CPU(Central Processing Unit), etc., which can execute the program relating to the account, are listed. Further, a customized LSI in which a program is previously installed, or gate array may be allowable.

Further, it is preferable that it has a transmission destination selection means (hereinafter, sometimes called the transmission destination designation means) which can select the transmission destination to which the face image information is transmitted by the transmitting means, from a plurality of transmission destinations. As a specific example of the transmission destination selection means, each kind of buttons, key board, touch panel, etc., are listed. Further, it may also be allowable that the transmission destination selection means and a transmission destination display means for displaying a plurality of transmission destinations, are combined. As a specific example of the transmission destination display means, a CRT display, liquid crystal display, plasma display, organic EL display, etc., are listed.

Further, when the transmission destination can be selected from a plurality of transmission destinations, it is preferable that the apparatus has the following modes. (1)

The face image information acquiring means is a face image photographing means for photographing the face image of the customer, and the photographing condition of the face image photographing means is changed corresponding to the transmission destination selected by the transmission destination selection means. For example, when the passport center is selected as the transmission destination, it is preferable that the photographing condition of the photographing means is changed in such a manner that the zoom magnification is adjusted so that the face image has the dimension of the face corresponding to the photograph for the passport, or the position of the subject is changed so that the position is one corresponding to the photograph for the passport, or the illumination is adjusted so that the brightness is one corresponding to the photograph for the passport. (2) When it has an image processing means to conduct the image processing of the face image information acquired by the face image acquiring means, it is preferable that the image processing condition of the face image information by the image processing means is changed corresponding to the transmission destination selected by the transmission destination selection means. For example, when the passport center is selected as the transmission destination, it is preferable to change the image processing condition of the face image photographing means, in such a manner that the dimension of the face image is adjusted by the image processing so that the dimension of the face is one corresponding to the photograph for the passport, or the position of the subject is changed by the image processing so that the position is one corresponding to the photograph for the passport, or the brightness is adjusted by the image processing so that the brightness is one corresponding to the photograph for the passport. As a specific example of the image processing means, an MPU (Micro Processing Unit), CPU (Central Processing Unit), which can execute the program relating to the image processing, are listed. Further, a customized LSI in which the program is previously installed, or gate array may also be allowable. (3) When it has an account means for accounting the compensation to the acquisition of the face image information of the customer by the face image information acquiring means/or the transmission of the of the face image information by the transmitting means, it is preferable that the account means sets the compensation corresponding to the transmission destination selected by the transmission destination selection means. In this case, it is preferable that the compensation is previously set for each transmission destination and stored.

Further, it is preferable that this apparatus has a printer to print out the face image according to the face image information acquired by the face image information acquiring means. According to this, in addition to the transmission of the face image information, the customer can bring back the face image information to home as a print. As a specific example of the printer, a thermal printer(sublimation type, fused type), silver halide photographic printer, inkjet printer, electronic photographic printer, etc., are listed. Further, according to only the face image information transmitted by the transmitting means, the face image may also be printed. Thereby, a useless operation to pint also the surplus face image which is practically not transmitted, can be deleted. Further, when the apparatus has an identification information providing means to provide the identification information to identify the face information of the customer, it is preferable that the identification information such as its ID number is also printed out together with the face image.

Further, it is preferable that the apparatus has a transmission propriety selection means (hereinafter, also called operation means) by which the customer can select whether the face image information acquired by the face image information acquiring means is transmitted by the transmitting means. In this case, it is preferable that the face image information of the customer acquired by the face image information acquiring means is confirmed by the face image displayed by the face image display means, or the print on which the face image is printed by the printer, and the customer judges the propriety of the transmission, and can select it. Further, when the customer selects the transmission or no-transmission by the selection means, it is preferable that the face image is acquired again by the face image acquiring means. As a specific example of the face image display means, a CRT display, liquid crystal display, organic EL display, plasma display, etc., are listed.

Further, it is preferable that the apparatus has a warning means to emit the warning when, in a predetermined time period from the acquisition of the face image information or the transmission of the face image information, the payment receiving means does not receive the compensation. Further, when, in a predetermined time period after the warning means emit the warning, the payment receiving means does not receive the compensation, it is preferable that the apparatus has a deletion means for deleting the face image information.

As a specific example of the warning means, an apparatus to warn by the sound, or an apparatus to warn by the image plane display, etc., is listed. Further, the MPU (Micro Processing Unit), or CPU (Central Processing unit), which can execute a program relating to the warning, may also be allowable. Further, the customized LSI in which the program is previously installed, or gate array may also be allowable. As a specific example of the deletion means, the MPU (Micro Processing Unit), or CPU (central Processing Unit), which can execute the program relating to the deletion of the face image information, is listed. Further, the customized LSI in which the program is previously installed, or gate array may also be allowable.

Further, it is preferable that the apparatus has a face image information recording means (hereinafter, sometimes called image information recording means) by which the face image information acquired by the face image information acquiring means is recorded in the image information recording medium. Thereby, in addition to the transmission of the face image information, the customer can record it in the recording medium and bring back it to home. Accordingly, it is preferable that the image information recording medium is a removable one. As a specific example of the image information recording medium, each kind of recording media in which the face image information can be recorded as the digital information (FD, MD, MO, CD, CD-ROM, CD-R, CD-RW, DVD, DVD-ROM, DVD-RAM, MT, DAT, Zip, etc.), is listed. Then, as the face image information recording means, each kind of recording apparatus of these recording media is listed.

Further, when the apparatus has the face image information recording means, corresponding to a fact that the payment receiving means receives the payment of the compensation, the face image information recording means may also record the face image information acquired by the face image information acquiring means in the face image information recording medium. Further, it is preferable that the customer can select whether the face image information acquired by the face image information acquiring means is recorded in the face image information recording medium, by the face image information recording means. Further, when the apparatus has the identification information providing means for providing the identification information to identify the face image of the customer, it is preferable that the identification information such as its ID number is also recorded in the information recording medium together with the face image.

Further, it is preferable that the face image information is transmitted by the transmitting means corresponding to the result of the comparison of the reference personal information which is the face image information of the customer, to the face image information acquired by the face image information acquiring means.

In this case, the reference personal information which is the face image information may also be the face image information inputted by the reference personal information input means possessed by a face image information acquisition transmission apparatus, or the face image information previously stored in the storage means.

As a specific example of the reference personal information input means of the face image information, a scanner or the like is listed. For example, the following mode in which the ID card having the face image or the license having the face image is read by the reference personal information input means, and the reference face image information is obtained, and the face image information and the face image information acquired by the face image information acquiring means are compared with each other by the comparison means, and as the result of the comparison, when it is judged that these are the same person, the face image information is transmitted, is listed as a preferable mode.

Further, the ID card having the face image or the license having the face image is previously read, and the face image information is previously stored in the storage means as the reference personal information. Then, a mode in which the face image information stored in the storage means and the face image information acquired by the face image information acquiring means are compared with each other by the comparison means, and as the result of that, when it is judged that these are the same person, the face image information is transmitted, is listed as a preferable mode.

In this connection, the face image information acquisition transmission apparatus may have the storage means, or another apparatus connected by the wire or wireless to the face image information acquisition transmission apparatus may have it, or both of the face image information acquisition transmission apparatus and another apparatus connected to it may have the storage means. Preferably, another apparatus connected by the wire or wireless to the face image information acquisition transmission apparatus has it. Particularly preferably, a plurality of face image information acquisition transmission apparatus are connected to the storage means. As the storage means, a server is preferable. Other than that, a memory, each kind of ROMs (mask ROM, EPROM, EEPROM etc. are included), each kind of RAMs (including DRAM, SDRAM, flash memory, miniature card, compact flash, smart media, PC card, etc.), hard disk, each kind of information recording media (FD, MD, MO, CD, CD-ROM, CD-R, CD-RW, DVD, DVD-ROM, DVD-RAM, MT, DAT, Zip, etc.) and their recording and reading apparatus are listed.

Further, it is preferable that the comparison of the reference personal information which is the face image information of the customer and the face image information acquired by the face image information acquiring means is compared by the comparison means. The comparison means may also be possessed by the face image information acquisition transmission apparatus, or by other apparatus connected to the face image information acquisition transmission apparatus by the wire or wireless. As a specific example of the comparison means, the MPU (Micro Processing Unit), or CPU (Central Processing Unit), by which the program relating to the comparison of the face image can be executed, is listed. Further, the customized LSI in which the program is previously installed, or gate array may also be allowable.

Further, it is preferable that the apparatus has the personal information input means (hereinafter, sometimes also called information input means) to input the personal information, and corresponding to the result of the comparison of the personal information inputted by the personal information input means and the reference personal information to identify the customer, the transmission of the face image information by the transmitting means is conducted.

As the personal information inputted from the personal information input means, the character information such as the ID number, the number of the license, the number of the passport, the number of the dwellers basic register, address, name, the date of birth, permanent domicile, etc., the face image information provided on the license, ID card or passport, the image information such as the finger print, palm print, iris, arrangement of the blood vessel, form of the ear, the electronic information recorded in the IC card, or the magnetic information recorded in the magnetic card, is listed.

As also the reference personal information (hereinafter, called also reference information), in the same manner as the above description, the character information such as the ID number, the number of the license, the number of the passport, the number of the dwellers basic register, address, name, the date of birth, permanent domicile, etc., the face image information provided on the license, ID card or passport, the image information such as the finger print, palm print, iris, arrangement of the blood vessel, form of the ear, the electronic information recorded in the IC card, or the magnetic information recorded in the magnetic card, is listed. The reference personal information is previously stored in the storage means, and when the personal information is inputted from the personal information input means, the inputted personal information and the reference personal information are compared to each other by the comparison means, and it is preferable that, when these two are coincide with each other, the face image information is transmitted. The same storage means and comparison means as described in the above, can be applied to the storage means and comparison means.

As a specific example of the personal information input means, the reading means of the IC card or magnetic card, the scanner for reading the finger print, palm print, iris, blood vessel arrangement and the form of the ear, the digital still camera, digital video camera, the key board to input the character information, button, touch panel, scanner, or pen type input unit, are listed.

The most preferable application of the present invention is for a self-service certificate photography photo-box by which the face image of the customer is automatically photographed and transmitted in the box type room having a height-adjustable chair and a light shield curtain.

Referring to the drawings, the embodiments of the present invention will be detailed below.

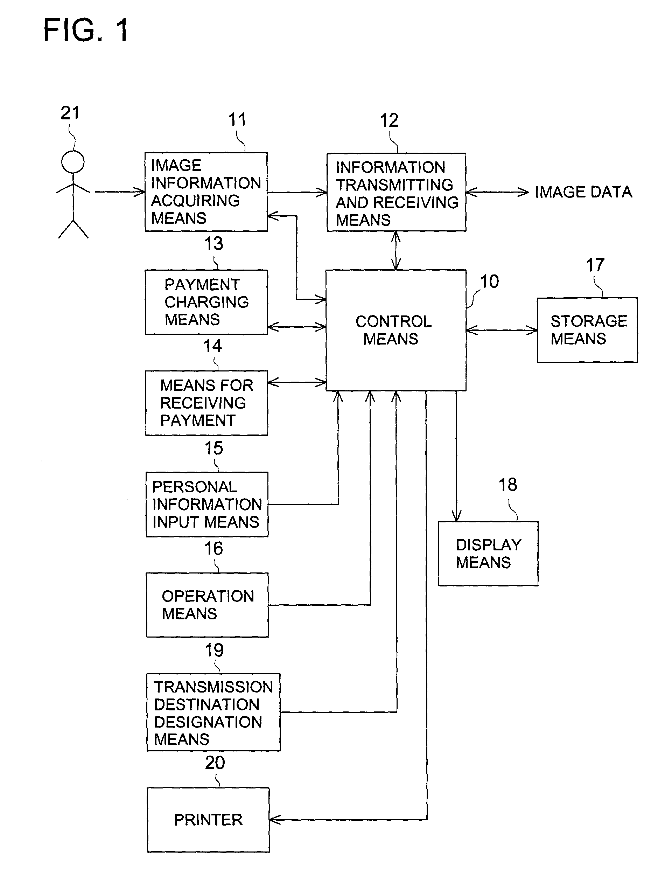

Fig. 1 is a block diagram showing the first embodiment of the present invention, and shows the structure of an apparatus of the present invention. In the drawing, numeral 11 is an image information acquisition means for acquiring the image information of a subject 21, and numeral 12 is a transmitting and receiving means for transmitting the image information of the subject 21 acquired by the image information acquisition means 11 to a transmission destination and for receiving the image information from the transmission destination. As the image information acquisition means 11, for example, a digital camera or digital video camera is used.

Numeral 13 is an payment charging means for charging the payment to the subject 21 for the image photographing and the image transmission, and for a service presented relating to a stamp charge, commission, and transmission, and numeral 14 is a means for receiving the payment of the charged payment (hereinafter, abbreviated as payment means), numeral 15 is a personal information input means for inputting a specific personal information of the subject, numeral 16 is an operation means for inputting each kind of commands, numeral 17 is a storage means for storing each kind of information, numeral 18 is a display means for displaying each kind of information, numeral 19 is a transmission destination designation means for designating the transmission destination of the photographed image information, and numeral 20 is a printer for printing the photographed image information. Numeral 10 is a control means for conducting a control operation of the whole system, and it is connected to the image information acquisition means 11, information transmitting and receiving means 12, payment charging means 13, payment means 14, personal information input means 15, operation means 16, storage means 17, display means 18, transmission destination designation means 19 and printer 20. When the operation of thus structured apparatus is described, it is as follows.

Initially, the subject 21 designates the transmission destination by the transmission destination designation means 19. When the control means 10 receives the transmission designation information from the transmission destination designation means 19, the control means 10 gives the designation to the payment charging means 13 corresponding to the condition inputted from the operation means 16. The account information corresponding to the condition of use is displayed on the display means 18 from the payment charging means 13 through the control means 10. The subject 21 pays the charge for use from the payment means 14 according to the display of the display means 18. When the control means 10 recognizes that a predetermined amount of charge for use is paid from the payment means 14, the control means 10 operates the image information acquisition means 11.

The information of the subject 21 (specifically, portrait information) is photographed by the image information acquisition means 11. The photographed portrait information is transmitted from the information transmitting and receiving means 12 to the transmission destination.

In this connection, as in the above example, the operation can be conducted in the order of payment - photographing - transmission, or can also be conducted in the order of photographing - payment - transmission. In the view point that the payment of the compensation is surely received, the former is preferable, and from the view point that the processing is effectively conducted, and the number of persons who can use the apparatus, per unit time is increased, the latter is preferable.

As described above, according to the embodiment of the present invention, when the subject pays the payment, the high image quality image information can be transmitted to the transmission destination, and even by the user who has no personal computer, digital camera, or communication means, the image information (specifically, portrait information) can be transmitted by the information transmitting and receiving means 12.

Herein, a content charged by the payment charging means 13 is the payment to the subject 21 for, for example, the acquisition of the image information and/or the information transmitting and receiving means 12. When such the payment is paid, the photographed image information can be transmitted.

In the case where such the image information is transmitted, the specific photographing, and input information of the subject can be inputted from the personal information input means 15. Herein, the photographing, and input information are, for example, a body feature specific to an individual such as a face image, the fingerprint information, palm print information, iris information, arrangement information of the blood vessel, form of an ear, etc., and the information by which the person can be specified, such as ID number, personal identification number, license number, passport number, number, address, name, date of birth, permanent domicile, entered in a dwellers basic register, and the information photographed and inputted into the apparatus of the present invention. Further, herein, the information specific to the individual, previously registered and controlled, for specifying the individual is called the reference information. The position in which the reference information is registered may be in the apparatus, or may also be in the other position. The administrator of the reference information is not specifically limited, but a publicly certified organization is preferable. By using such the information, the confirmation of the person itself of the subject can be conducted. Further, when such the information is transmitted together with the portrait photograph, the degree of the trust can be increased when the transmitted portrait photograph is used for each kind of procedures. Further, such the information can be advantageously used as the information showing that the transmitted portrait is whose one.

A portion of the specific photographing and input information of the subject 21 inputted from the personal information input means 15 is used as the search key information for reading out the reference information from the storage means 17, and the person itself can also be confirmed by comparing the searched reference information and the photographing and input information other than the information used as the search key information with the obtained reference information.

The control means 10 temporarily stores the inputted photographing and input information in the storage means 17. Next, the information stored in the apparatus or the reference information such as the fingerprint information or ID number previously stored in the storage means accompanying to the outside apparatus (for example, personal information control server), is read out through the information transmitting and receiving means 12.

Then, the read out reference information such as the fingerprint information or ID number is compared with the photographing and input information such as the fingerprint information or ID number, stored in the storage means 17. Then, as the result of the comparison, when the both information coincide with each other, the transmission command is sent to the information transmitting and receiving means 12, and the photographed image information can be transmitted. Thereby, the reference information read from the storage means provided in the apparatus or the storage means separately provided is compared with the photographing and input information inputted from the personal information input means 15, and when both information coincide with each other, it is judged that the subject is the person, and the image information can be transmitted.

Further, the personal information input means 15 can also input the information recorded in the license. The license is the strongest means for discriminating the individual, and by using the information written in the license, the collation of the person can be more surely conducted.

Specifically, the portrait photograph of the license is inputted from the personal information input means 15, and the control means 10 compares the portrait photograph with the portrait photograph photographed by the image information acquisition means 11 at the position. As the result of the comparison, when these coincide with each other, the control means 10 gives the command to the information transmitting and receiving means 12, and the image information can be transmitted. According to this, corresponding to the comparison result, the image information can be transmitted from the information transmitting and receiving means 12. In this case, the written items in the license other than the portrait photograph is read out, and can be added to the transmission information.

In the above description, the case where the portrait photograph in the license is collated, is taken as an example, however, the present invention is not limited to this, but the ID card on which the portrait photograph of the subject is recorded, may also be available. According to this, the portrait photograph recorded on the ID card is compared with the portrait photograph photographed at the position, and corresponding to the comparison result, the image information can be transmitted. In this case, the reading-in of the ID card and the input of the password can also be made the condition.

Further, according to the present invention, the photographing condition of the subject can be changed corresponding to the transmission destination. For example, when the transmission destination is a passport center, the severity is required for the usable portrait photograph. For example, it is regulated that the longitudinal direction is 27 mm ± 2 mm, the margin from the head portion is 7 mm ± 2 mm. Accordingly, in such the case, the command is sent from the control means 10 to the image information acquisition means 11, and the photographic condition (for example, the size of the face) is appropriately set. According to this, the optimum image information can be obtained corresponding to the transmission destination.

According to the present invention, under the condition that the payment charged by the payment charging means 13 is paid by the subject 21, the apparatus can be structured such that the control means 10 can permit the information transmission. According to this, the operation of the apparatus by the mischief or the like, can be excluded.

In this case, when the payment is not paid within a predetermined period of time, the alarm is given, and when a predetermined period of time has passed after the alarm, the control means 10 can erase the information. According to this, the operation of the apparatus by the mischief or the like, can be excluded.

Before the image information is transmitted to the outside apparatus, the control means 10 can display the photographed portrait photograph of the subject 21 on the display means 18. When the image displayed on the display means 18 is not a favorite one, the subject 21 operates the operation means 16, and can be photographed again. Then, finally, the favorite image can be transmitted from the information transmitting and receiving means 12 to the outside apparatus.

Further, the control means 10 can print out the image by the printer 20 according to the image information transmitted from the information transmitting and receiving means 12. According to this, because the image information transmitted to the transmission destination can be printed by the printer 20, the transmitted image can be confirmed.

Further, according to the present invention, the subject 21 can select the desired transmission destination by the transmission destination designation means 19. The control means 10 accounts the payment corresponding to the transmission destination, and notifies the result to the payment charging means 13. As the result, the transmission destination can be easily selected and the account can be conducted corresponding to the transmission destination. The designation of the transmission destination can also be conducted by the license or ID card inserted into the apparatus by the subject.

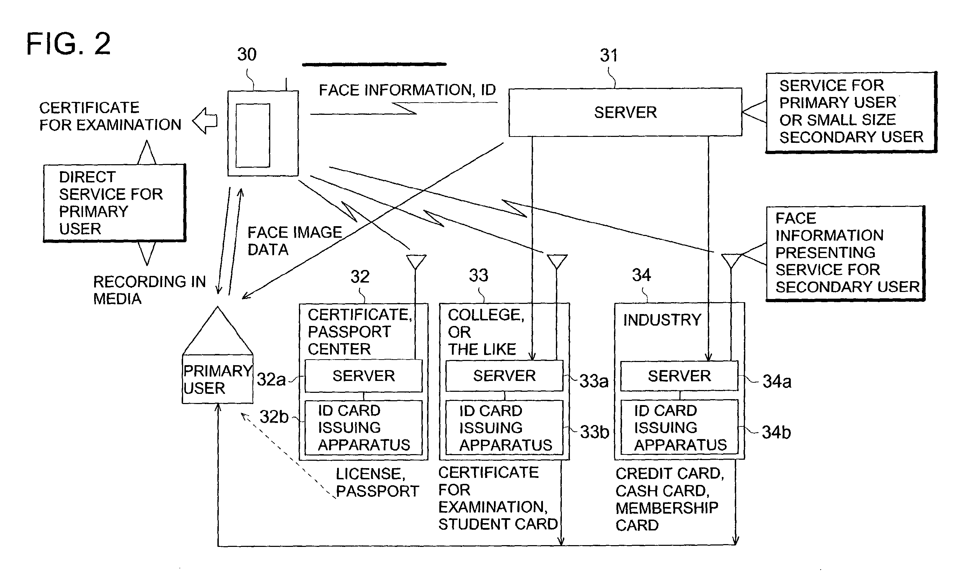

Fig. 2 is a conceptual view of a system using the present invention. In the drawing, numeral 30 is an apparatus of the present invention according to the present invention. By a single body of the apparatus 30 of the present invention, the direct service for the primary user (subject) can be conducted. As a kind of the direct services, there are, for example, the application procedure, an issue of a certificate for examination, and recording into the medium of the portrait photograph, and the like. The apparatus 30 of the present invention is connected to a server 31, and can conduct each kind of services for the primary user or a small scale secondary user (persons who use the portrait photograph).

Further, the apparatus 30 of the present invention is connected to a license · passport center 32, colleges 33, or industry 34. In the drawing, the case where it is connected with a wireless is shown, however, it is not limited to the wireless, but, it may be connected with a wire. The license · passport center 32 is structured by a server 32a and an ID certificate issue apparatus 32b. Then, the portrait photograph information transmitted from the apparatus 30 of the present invention is stored in the inside storage means, and the portrait photograph information is read out at need, and the license and passport can be issued.

The colleges 33 are structured by a server 33a and ID certificate issue apparatus 32b, and the portrait photograph information transmitted from the apparatus 30 of the present invention is stored in the server 33a, and the portrait photograph information is read out at need, and the certificate for examination or the student card is issued for the primary user. The industry 34 is structured by a server 34a and ID certificate issue apparatus 34b, and the portrait photograph information transmitted from the apparatus 30 of the present invention is stored in the server 34a, and the portrait photograph information is read out at need, and the credit card, cash card, membership card, etc. are issued.

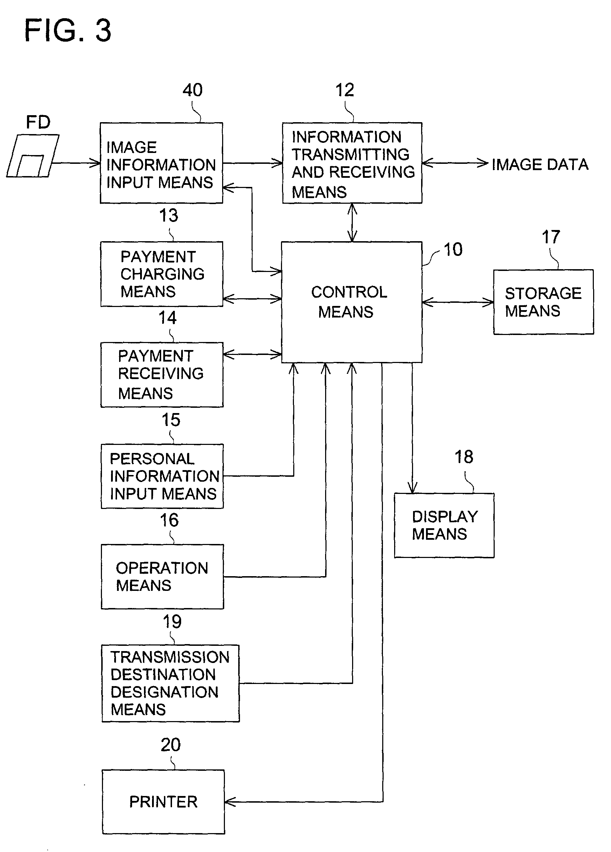

Fig. 3 is a block diagram showing the second embodiment of the present invention. The same components as in Fig. 1 are shown by the same reference numerals and signs. The different point in the structure from the first embodiment shown in Fig. 1 is a point in which, instead of the image information acquisition means 11, the image information recorded in a floppy disk, or the like, is taken-in by the image information input means 40, and is made the image information. The example of the other structures is entirely the same as the structures shown in Fig. 1. Accordingly, the entirely same effect as the embodiment shown in Fig. 1 can be obtained. When the operation of thus structured apparatus is described, it is as follows.

Initially, the user 45 records the his image information in the floppy disk or ID card, and brings it to an image information acquisition transmitting apparatus. Then, the floppy disk or ID card is inserted into the image information input means 40, and the stored image information is read in. The control means 10 stores the read-in image information in the storage means 17.

Initially, the user 45 designates the transmission destination from the transmission destination designation means 19. When the control means 10 receives the transmission destination information from the transmission destination designation means 19, it gives the indication to the payment charging means 13 corresponding to the condition inputted from the operation means 16. The account information corresponding to the condition of use is displayed on the display means 18 from the payment charging means 13 through the control means 10. The user pays the fee of using from the payment means 14 according to the display on the display means 18. When the control means 10 recognizes that a predetermined amount of the fee of using is paid from the payment means 14, the control means 10 operates the image information input means 40.

The information (specifically, the portrait information) of the user 45 is read in by the image information input means 40. The read-in portrait information is transmitted to the transmission destination from the information transmitting and receiving means 12.

As described above, according to the embodiment of the present invention, when the user pays the payment, the high image quality image information can be transmitted to the transmission destination, and also even by the user who has no personal computer, digital camera, or communication means, the image information (specifically, the portrait photograph information) can be transmitted by the information transmitting and receiving means 12.

Herein, a content charged by the payment charging means 13 is the payment to the user 45 for, for example, the acquisition of the image information and/or the information transmitting and receiving means 12, and for a service presented relating to a stamp charge, commission, and transmission. When such the payment is paid, the photographed image information can be transmitted. The payment of the compensation is the cash, and other than that, the payment means instead of the cash can be used without limitation. For example, the charge payment methods, like that the credit card is inserted, the credit card number is inputted, the prepaid card is used, the debit card is used, the payment service of the portable phone is used, can be listed.

In the case where such the image information is transmitted, the specific photographing, and input information of the user 45 can be inputted from the personal information input means 15. Herein, the photographing, and input information is the information by which the person can be specified, such as, for example, the finger print information, ID number, or the like. The control means 10 temporarily stores the inputted photographing, and input information in the storage means 17. Next, the finger print information, ID number, or the like, previously stored in the storage means belonging to the outside apparatus (for example, personal information control server), is read out through the information transmitting and receiving means 12.

Then, the read-out finger print information or ID number is compared with the finger print information or ID number stored in the storage means 17. Then, as the result of comparison, when both information coincide with each other, the transmission command is sent to the information transmitting and receiving means 12, and the photographed image information can be transmitted. According to this, the reference information read from the separately provided storage means is compared with the photographing and input information inputted from the personal information input means 14, and when both coincide with each other, the subject is judged to be the person, and the image information can be transmitted.

Further, the personal information input means 15 can also input the information recorded in the license. The license is the strongest means for discriminating the individual, and by using the information written in the license, the collation of the person can be more surely conducted.

Specifically, the portrait photograph of the license is read from the personal information input means 15, and the control means 10 compares the portrait photograph of the license with the portrait information stored in the image information input means 40 at the position. As the result of the comparison, when these coincide with each other, the control means 10 gives the command to the information transmitting and receiving means 12, and the image information can be transmitted. According to this, corresponding to the comparison result, the image information can be transmitted from the information transmitting and receiving means 12.

In the above description, the case where the portrait photograph in the license is collated, is taken as an example, however, the present invention is not limited to this, but the ID card on which the portrait photograph of the subject is recorded, may also be available. According to this, the portrait photograph recorded on the ID card is compared with the portrait photograph photographed at the position, and corresponding to the comparison result, the image information can be transmitted. In this case, the reading-in of the ID card and the input of the password can also be made the condition.

Further, according to the present invention, the read-in condition of the image information of the user can be changed corresponding to the transmission destination. For example, when the transmission destination is a passport center, the severity is required for the usable portrait photograph. For example, it is regulated that the longitudinal direction is 27 mm ± 2 mm, and the margin from the head portion is 7 mm ± 2 mm. Accordingly, in such the case, the command is sent from the control means 10 to the image information input means 40, and the input condition (for example, the size of the face) is set more severe than the usual. According to this, the optimum image information can be obtained corresponding to the transmission destination.

According to the present invention, under the condition that the payment charged by the payment charging means 13 is paid by the user 45, the apparatus can be structured such that the control means 10 can permit the information transmission. According to this, the operation of the apparatus by the mischief or the like, can be excluded.

In this case, when the payment is not paid within a predetermined period of time, the alarm is given, and when a predetermined period of time has passed after the alarm, the control means 10 can erase the information. According to this, the operation of the apparatus by the mischief or the like, can be excluded.

Before the image information is transmitted to the outside apparatus, the control means 10 can display the photographed portrait photograph of the user 45 on the display means 18. When the image displayed on the display means 18 is not a favorite one, the user 45 operates the operation means 16, and can be photographed again. Then, finally, the favorite image can be transmitted from the information transmitting and receiving means 12 to the outside apparatus.

Further, the control means 10 can print out the image by the printer 20 according to the image information transmitted from the information transmitting and receiving means 12. According to this, because the image information transmitted to the transmission destination can be printed by the printer 20, the transmitted image can be confirmed.

Further, according to the present invention, the user 45 can select the desired transmission destination by the transmission destination designation means 19. The control means 10 accounts the payment corresponding to the transmission destination, and notifies the result to the payment charging means 13. As the result, the transmission destination can be easily selected and the account can be conducted corresponding to the transmission destination.

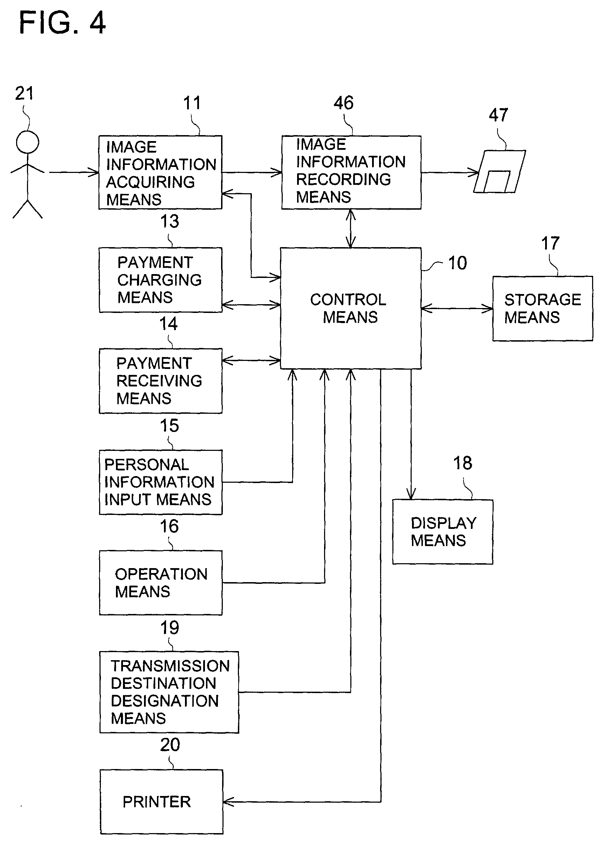

Fig. 4 is a block diagram showing the third embodiment of the present invention. The same components as in Fig. 1 are shown with the same reference numerals and signs. In this embodiment, the photographed image information is not transmitted, but, is stored in the removable information storage medium.

In the drawing, numeral 46 is an image information recording means connected to the control means 10, and numeral 47 is a removable image information storage medium in which the image information is written by the image information recording medium 46. As the image information storage medium 47, for example, a floppy disk or IC card is used. The other structure is the same as in Fig. 1. When the operation of thus structured apparatus will be described, it is as follows.

Initially, the subject 21 inputs the photographing start of the image from the operation means 16. When the control means 10 receives this signal, the control means 10 gives the indication to the payment charging means 13 corresponding to the condition inputted from the operation means 16. The account information corresponding to the condition of using is displayed on the display means 18 from the payment charging means 13 through the control means 10. The user pays the charges of using from the payment means 14 according to the display of the display means 18. When the control means 10 recognizes that the a predetermined amount of charge of using is paid from the payment means 14, the control means 10 gives a start signal to the image information acquisition means 11.

The information of the subject 21 (specifically, the face information) is photographed from the image information acquisition means 11. When the control means 10 inputs the information from the image information acquisition means 11, the control means 10 gives the indication to the image information recording means 46, and the read-in image information is recorded in the image information storage medium 47.

According to this embodiment, the image information acquired by the image information acquisition means 11 can be recorded in the removable image information storage medium 47. Further, under the condition that the payment is paid, the image information acquired by the image information acquisition means 11 can be stored in the removable image information storage medium 47.

The image information acquired by the image information acquisition means 11 is displayed on the display means 18 through the control means 10. The subject observes the image displayed on the display means 18 and when the displayed image is favorite, the subject gives the instruction from the operation means 16 to the control means 10. The control means 10 starts the image information recording means 46, and records the acquired image information in the removable image information storage medium 47. According to this, the favorite image information of the subject can be recorded in the removable image information storage medium 47. When the image information is not a favorite one, the photographing is conducted from the image information acquisition means 11 until the favorite image information can be obtained.

As described above, when the image information is recorded in the image information storage medium 47, the image information recorded in the image information storage medium 47 can be printed by the printer 20. Accordingly, the recorded image can be confirmed.

Next, referring to Fig. 3, another embodiment of the present invention will be described. In the present invention, when the image information is transmitted to the transmission destination, the image information of the subject can be transmitted together with the discrimination information of the subject set peculiarly to the transmission destination. That is, the control means 10 transmits the image information of the subject inputted by the image information input means 40, and the photographing and input information of the subject inputted from the personal information input means 15 from the information transmitting and receiving means 12. For example, the information is selected at need like as, when the transmission destination is a license center, it is the license number, or when the transmission destination is a passport center, the name, date of birth, permanent domicile, and present address, or when the transmission destination is a college, it is the name, date of birth, residence, and such the information can be sent together with the image information.

Herein, as the personal information of the subject inputted from the personal information input means 15, there are ID number, date of birth, name of the subject, and the like. At the transmission destination, because the photographing and input information of the subject sent together with the image information are referred, the confirmation of the subject at the transmission destination becomes easy.

Further, the control means 10 compares the reference information read from the personal information control server at the transmission destination with the photographing and input information inputted from the personal information input means 15. As the comparison result, when both information coincide with each other, the control means 10 starts the information transmitting and receiving means 12, and transmits the inputted image information to the transmission destination. According to this, the reference information previously stored in the personal information control server is compared with the photographing and input information inputted from the personal information input means 15, and when both information coincide with each other, these can be transmitted to the transmission destination, and the sure image information can be transmitted.

Also in this embodiment, when the subject is pleased with the image information inputted from the image information input means 40, the subject gives the transmission command from the operation means 16 to the control means 10, and can transmits the image information. When the subject is not pleased with the image information, the subject reads out other image information recorded in the floppy disk, and searches the favorite image information. Then, the favorite image information is transmitted.

Then, when the image information is transmitted from the information transmitting and receiving means 12, the transmitted image information can be printed by the printer 20, and the transmitted image can be confirmed.

As described above, according to the present invention, the following effects can be obtained.

When the photographed person pays the compensation, the face image information having so high image quality that it can be used as the certificate photograph, can be transmitted to the specified transmission destination, and even the customer having no personal computer, digital camera, or transmitting means, can transmit the face image, and it is not necessary to take the trouble to bring the face photograph to the transmission destination, and the troublesome procedure at the time of the issue of the passport or license can be neglected.

Disclosed embodiment can be varied by a skilled person without departing from the sprit and scope of the invention.

## Claims

1. A face image information acquiring transmitting apparatus, comprising:
a face image information acquiring section to acquire face image information of a customer;
a transmitting section to transmit the face image information acquired by the face image information acquiring section to a transmission destination; and
a payment receiving section to receive a payment charged to the customer.

2. The face image information acquiring transmitting apparatus of claim 1, wherein the transmitting section transmits the face image information acquired by the face image information acquiring section to the transmission destination in response to the receipt of the payment by the payment receiving section.

3. The face image information acquiring transmitting apparatus of claim 1, wherein the payment receiving section is allowed to receive the payment in response to the transmission of the face image information acquired by the face image information acquiring section to the transmission destination by the transmitting section.

4. The face image information acquiring transmitting apparatus of claim 1, further comprising:
an ID (identification) information providing section to provide ID information to identify the face image of the customer, wherein the transmitting section transmits the face image information acquired by the face image information acquiring section to the transmission destination together with the ID information provided by the ID information providing section.

5. The face image information acquiring transmitting apparatus of claim 1, wherein the face image information acquiring section is a face image photographing device to photograph the face image of the customer.

6. The face image information acquiring transmitting apparatus of claim 1, wherein the face image information acquiring section is a face image information reader to read the face image information from a recording medium to record the face image information of the customer.

7. The face image information acquiring transmitting apparatus of claim 1, further comprising:
a payment charging section to charge a payment for the acquisition of the face image information of the customer by the face image information acquiring section and/or for the transmission of the face image information by the transmitting section.

8. The face image information acquiring transmitting apparatus of claim 1, further comprising:
a transmission destination selecting section to select the transmission destination to be transmitted with the face image information by the transmitting section from a plurality of transmission destinations.

9. The face image information acquiring transmitting apparatus of claim 8, wherein the face image information acquiring section is a face image photographing device to photograph the face image of the customer based on a photographing condition, and wherein the face image photographing device changes the photographing condition in accordance with the transmission destination selected by the transmission destination selecting section.

10. The face image information acquiring transmitting apparatus of claim 8, further comprising:
an image processing section to conduct an image processing to the face image information acquired by the face image information acquiring section based an image processing condition, wherein the image processing section changes the image processing condition in accordance with the transmission destination selected by the transmission destination selecting section.

11. The face image information acquiring transmitting apparatus of claim 8, further comprising:
a payment charging section to charge a payment for the acquisition of the face image information of the customer by the face image information acquiring section and/or for the transmission of the face image information by the transmitting section, wherein the payment charging section charges the payment in accordance with the transmission destination selected by the transmission destination selecting section.

12. The face image information acquiring transmitting apparatus of claim 1, further comprising:
a transmission permission selecting section to select permitting or not permitting the transmitting section to transmit the face image information acquired by the face image information acquiring section.

13. The face image information acquiring transmitting apparatus of claim 1, further comprising:
a printer to print a face image based on the face image information acquired by the face image information acquiring section.

14. The face image information acquiring transmitting apparatus of claim 1, further comprising:
a warning section to issue a warning in the case that the payment receiving section does not receive the payment within a predetermined time after the face image information is acquired or after the face image information is transmitted, and
an eliminating section to eliminate the face image information in the case that the payment receiving section does not receive the payment within a predetermined time after the warning section issues the warning.

15. The face image information acquiring transmitting apparatus of claim 1, further comprising:
a face image information recording section to record the face image information acquired by the face image information acquiring section into an image information recording medium.

16. The face image information acquiring transmitting apparatus of claim 1, wherein the transmitting section transmits the face image information in accordance with a comparison result between a reference personal information representing the face image information of a customer and the face image information acquired by the face image information acquiring section.

17. The face image information acquiring transmitting apparatus of claim 1, further comprising:
an inputting section to input a personal information, wherein the transmitting section transmits the face image information in accordance with a comparison result between the inputted personal information and a reference personal information to identify the customer.
